# EUROPÄISCHE PATENTSCHRIFT

(11) **EP 1 149 634 B1**
(45) Veröffentlichungstag und Bekanntmachung des Hinweises auf die Patenterteilung: **15.10.2003**
(21) Anmeldenummer: 01110525.1
(22) Anmeldetag: 28.04.2001
(51) Int. Cl.: C09J 7/04, B05B 15/04, C09J 7/02

(54) **Abdeckband und seine Verwendung**
Masking tape and use thereof
Bande de masquage et son utilisation

(30) Priorität: 29.04.2000 DE 10021243
(43) Veröffentlichungstag der Anmeldung: 31.10.2001
(73) Patentinhaber: Tesa AG, 20253 Hamburg (DE)
(72) Erfinder: Nickel, Oliver, 22587 Hamburg (DE)

(56) Entgegenhaltungen:
- EP-A- 0 999 251
- WO-A-00/15727
- DE-U- 29 617 896
- US-A- 5 935 669

## Beschreibung

Die Erfindung betrifft ein Abdeckband, um insbesondere beim Autolackieren bestimmte Teile abzudecken, sowie diese seine Verwendung. Insbesondere ist das Abdecken von mittleren bis großen Oberflächen, die bei Lackreparaturarbeiten in Kfz.-Werkstätten nicht mit Farbe in Kontakt kommen dürfen, vorgesehen.

Derartige Abdeckbänder bzw. Hauben sind bekannt und verbreitet im Einsatz. Standardmaterialien sind u.a. etwa 50 g starke Spezialpapiere bzw. Zeitungspapiere, aber auch gefaltete Kunststoffhauben, ca. 30 µm stark (ca. 30 g/m²), oder "Endlos"-Folien von der Großrolle (2 m breit), sowie "2 in 1 "-Systeme als gefaltete PE-Folien mit Klebeband, schließlich auch PE beschichtete Papiere mit Klebeband.

Die Anforderungen an solche Abdecksysteme sind vor allem:
- Farbhaftung = nach der Ofentrocknung darf die Farbe nicht von dem Abdeckmaterial in die frische Farbe fallen.
- Abfall = ein geringes Abfallvolumen ist wichtig, da sich danach der Preis der Entsorgung bestimmt.
- Anzahl der Personen = normalerweise wird ein Auto von nur einem Lackierer bearbeitet. Daher sollte die Abdeckung einfach von einer Person aufzubringen sein.
- Anzahl der Arbeitsgänge = gefordert sind wenige und schnelle Arbeitsgänge.
- Materialverbrauch: Zur Anbringung der Abdeckung ist ein temperaturgeeignetes Klebeband erforderlich. Die Materialverbräuche von Abdeckmaterial und Klebeband sollen gering sein.

Solchen Anforderungen werden die bisher bekannten Abdeckbänder und dergleichen nur bedingt gerecht.

| | **Vorteile** | **Nachteile** |
|---|---|---|
| Papiere | • Optimale Farbhaftung auch bei dickerem Farbauftrag im Randbereich • geringe Kosten | • Farbdurchschlag vor allem bei dickerem Farbauftrag im Randbereich • Abdeckung muß nachträglich mit Klebeband ausgerüstet werden • Spenden nicht direkt am Fahrzeug. Dadurch wird z.T. zu viel Material verbraucht, da manchmal zu viel oder zu wenig Papier abgespendet wird |
| Hauben | • Kein Farbdurchschlag • Das gesamte Fahrzeug wird abgedeckt • Die Kunststoffhaube läßt sich leicht einschneiden um die zu lackierende Stelle freizulegen | • Farbhaftung nicht optimal • Relativ hoher qm-Preis • Hoher Materialverbrauch da immer nur vollflächig abgedeckt werden kann • Hauben sind meistens eingefärbt. Dadurch können die Pkws im abgedeckten Zustand nicht rangiert werden |
| Endlosfolie | • s. Hauben | • s. Hauben (Ausnahme: Materialverbrauch, da auch partiell abgedeckt werden kann) |
| 2 in 1 - Systeme gefaltete Folien mit Abdeckband | • Kein Farbdurchschlag bei der Folie • Kein Farbdurchschlag und ausreichende Haftung beim PE beschichteten Papier • Spenden am Fahrzeug • handlich • gering | • Optimales Ergebnis nur bei der Verwendung von beiden Produkten (d.h. Papier im Randbereich und Folie für die große Fläche) • Beide Produkte sind jeweils mit Klebeband ausgerüstet |
| PE beschichtetes Papier mit Ab- deckband | • wenig Müll durch 10 µm Dicke der PE-Folie | • Papier ist durch die Beschichtung (Verbund) und die Bleichung (weiß) nicht umweltfreundlich und teuer |

Aufgabe der Erfindung war es, hier Abhilfe zu schaffen, insbesondere ein Abdeckband zu schaffen, bei dem ein preiswertes, saugfähiges bzw. haftfähiges Material eingesetzt werden kann, das insbesondere eine gute Haftung für Lack und dergleichen aufweist (Farbhaftung).

Gelöst wird diese Aufgabe durch ein Abdeckband, wie dies in den Ansprüchen näher gekennzeichnet ist.

Damit vereint die Erfindung die sehr guten Eigenschaften von saugfähigen bzw. haftfähigem Material hinsichtlich der Farbhaftung und die sehr guten Eigenschaften von Folien in Bezug auf die Sicherheit gegen Farbdurchschlag in einem handlichen Produkt.

Das Produkt besteht damit aus drei Produkten in einem und kann daher als "3 in 1" bezeichnet werden. Die Bausteine sind saugfähiges bzw. haftfähiges Material, Klebeband mit biegsamem Folienträger und Folie. Bevorzugt sind als
- z. B. Papier: als saugfähiges Material 30 - 40 g / m² ungebleichtes Kraftpapier, 20 - 40 cm breit
- Folie: 10 µm (= 10 g / m²) vorbehandelte (Corona) PE-Folie (Oberflächenspannung ca. 38 dyn), Breite der Folie je nach Anwendung zwischen 500 mm und 2000 mm. Variable Länge in der Regel zwischen 10 -30 m .
- Klebeband: mit biegsamem Folienträger, insbesondere aus PP, ganz besonders aus PVC, bevorzugt Weich-PVC, ca. 80 - 150 µm dick und Temperaturbeständigkeit von 80 - 150°C, z. B. tesa 41^74, 4244, 4244 N2, 4215 und 7133 im Handel durch Beiersdorf AG.

Das saugfähige Material, insbesondere Gewebe, Vlies oder Papier dient dazu, den größeren Farbauftrag im Randbereich der Lackierung aufzusaugen und auch nach der Ofentrocknung sicher festzuhalten, so dass keine Farbe in den noch weichen, frischen Lack fallen kann. Die Folie ist durch die Corona-Behandlung vorzugsweise so präpariert, dass ein Farbnebel sicher fixiert wird. Weiterhin verhindert die Folie, dass z.B. Farbe durch das Papier auf den Lack durchschlagen kann.

Im einzelnen ergeben sich folgende Produktvorteile:
- Optimale Farbhaftung a) im kritischen Randbereich durch z.B. das saugfähige Papier und b) auf der restlichen Abdeckfläche durch die insbesondere vorbehandelte Folie,
- Optimaler Schutz gegen Farbdurchschlag durch die Folie,
- Erheblich weniger Müll durch die nur dünne Folie (z.B. 5x weniger als 50 g Papier),
- Handhabung von nur einer Person bedingt durch das handliche Format und das vorgefertigte Produkt,
- optimaler Materialverbrauch a) in Bezug auf das Abdeckmaterial bedingt durch das direkte Spenden am Fahrzeug und b) hinsichtlich des Klebebandes aufgrund der standardisierten Breite, z.B. 25 mm,
- Zeitersparnis durch wenig Arbeitsschritte (3 in 1).

Produktvorteile im Vergleich zum "2 in 1 "-System:
- Für den Randbereich kann insbesondere preisgünstiges, unvorbehandeltes Standardkraftpapier verwendet werden, das dem Lackierer vertraut ist.
- Abdecken des Randbereichs und der Großfläche in einem Arbeitsgang.
- Klebeband wird nur einmal benötigt.

Im folgenden soll die Erfindung anhand eines Beispiels beschrieben werden, ohne sie indessen unnötig einschränken zu wollen. Es zeigen:
- Fig. 1:: eine schematische Seitenansicht eines erfindungsgemäßen Abdeckbandes mit gefalteter Abdeckfolie.
- Fig. 2: eine Ansicht wie in Fig. 1, jedoch mit teils entfalteter Abdeckfolie, und
- Fig. 3: eine Ansicht wie in Fig. 1, wobei nun die Abdeckfolie voll entfaltet ist.

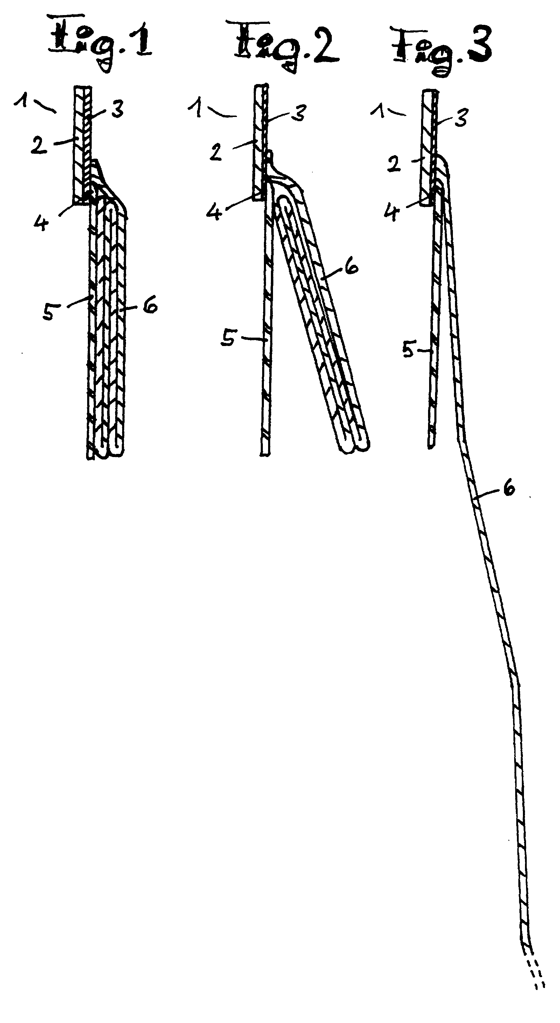

Im einzelnen zeigen die Figuren 1 - 3 ein Klebeband 1 mit einem Folienträger 2 aus Weich-PVC 100 µm dick, Temperaturbeständigkeit bis 150°C und einer Selbstklebemasse 3. Geeignet ist dafür insbesondere ein temperaturbeständiges sog. masking tape, das einer Ofentrocknung bei bis zu 130°C (1 Stunde) widersteht, wie es als tesa 4309 von der Beiersdorf AG, Deutschland, im Handel erhältlich ist, Breite 25 mm, Dicke 170 µm, Adhäsion auf Stahl 8, 75 N/25 mm. Auf dem einen Randbereich 4 dieses Klebebandes (1 ) ist in 3 mm Breite ein ungebleichtes Kraftpapier als Abdeckpapier 5 geklebt, 30 cm breit, 35 g/m². Neben diesem Abdeckpapier 5 ist auf den nächsten Teil dieses Randbereichs 4 in einer Breite von 3 mm eine Abdeckfolie 6 geklebt, eine 10 µm dicke Corona-vorbehandelte PE-Folie, 1 m breit und gefaltet.

Die Faltung der Abdeckfolie 6 ist an sich bekannt und wird insbesondere so vorgenommen, wie dies eben bekannt und für den Anwender gewohnt ist, wobei das gesamte Abdeckband der leichteren Handhabung wegen noch zur Rolle aufgewickelt wird. Bevorzugt wird dabei die Faltung so vorgenommen, dass sich die Falten der Abdeckfolie 6 in Richtung des Abdeckmaterials 5 aufeinanderlegen und im gefalteten Zustand von diesem gehalten werden. Dies hat den Vorteil, dass z. B. ein mit einem erfindungsgemäßen Abdeckband ausgerüstetes, zum Lackieren vorbereitetes Auto noch bewegt und bestiegen werden kann, während das Abdeckband zwar montiert aber noch nicht entfaltet ist. Erst wenn das Auto an seinem vorgesehenen Platz zur vorgesehenen Zeit ist, wird das Abdeckband durch ein leichtes Anheben des Abdeckmaterials 5 entfaltet, d.h. die Abdeckfolie 6 fällt herab, ohne dass weitere Maßnahmen oder Arbeit nötig wäre.

## Patentansprüche

1. Abdeckband aus
a) einem temperaturbeständigen Klebeband (1 ) mit einem biegsamen Folienträger (2) und einer Selbstklebemasse (3),
b) einem im Randbereich (4) der Selbstklebemasse (3) aufkaschierten Abdeckmaterial (5) mit guter Farbhaftung und Saugfähigkeit, sowie
c) einer in ebendemselben Randbereich (4) der Selbstklebemasse (3) aufkaschierten Abdeckfolie (6), wobei
d) die Abdeckfolie (6) das Abdeckpapier (5) an der Seite vollständig abdeckt, an der sich die Selbstklebemasse (3) des Klebebandes (1 ) befindet und damit in aufgeklebten Zustand das Abdeckpapier (5) hinterlegt.

2. Abdeckband nach Anspruch 1, **dadurch gekennzeichnet, dass** das Klebeband (1) ein temperaturbeständiges Klebeband für den Autolackierer ist, ein sogenanntes fine line tape insbesondere eines mit einer Temperaturbeständigkeit von maximal 130°C (1 Stunde), insbesondere ein solches mit einem Folienträger aus Polypropylen oder Weich-PVC.

3. Abdeckband nach Anspruch 1, **dadurch gekennzeichnet, dass** das Klebeband (1 ) 15 - 75 mm breit, insbesondere 19 - 30 mm breit ist.

4. Abdeckband nach Anspruch 1, **dadurch gekennzeichnet, dass** das Abdeckmaterial (5) aus Papier, Gewebe, Vlies besteht.

5. Abdeckband nach Anspruch 1, **dadurch gekennzeichnet, dass** das Abdeckmaterial (5) ein ungebleichtes Kraftpapier von 30 - 40 g/m² ist und eine Breite von 15 - 50 cm insbesondere 20 - 40 cm aufweist.

6. Abdeckband nach Anspruch 1, **dadurch gekennzeichnet, dass** die Abdeckfolie (6) eine 7 - 40, insbesondere 8 - 20 µm dicke Folie aus Polyolefin ist, besonders Polyethylen, und insbesondere Corona-vorbehandelt, deren Breite 0,5 - 2 m beträgt.

7. Abdeckband nach Anspruch 1, **dadurch gekennzeichnet, dass** die Abdeckfolie (6) ausziehbar gefaltet vorliegt, insbesondere an die Ausmaße des Abdeckmaterials (5) angelehnt und an dieses zieharmonikaartig gefaltet vorliegt.

8. Abdeckband nach Anspruch 1, **dadurch gekennzeichnet, dass** der Randbereich (4) der Selbstklebemasse (3) auf dem das Abdeckmaterial (5) klebt, 1 - 5, insbesondere 2 - 4 mm breit ist, und der daran anschließende Randbereich (4) der Selbstklebemasse (3), auf dem die Abdeckfolie (6) klebt, 1 - 5, insbesondere 2 - 4 mm breit ist.

9. Abdeckband nach Anspruch 1, **dadurch gekennzeichnet, dass** es zur Rolle gewickelt vorliegt, wobei die Abdeckfolie (6) gefaltet ist und die Höhe der Rolle etwa der Breite des Abdeckmaterials (5) plus der Breite des Klebebandes (1) entspricht.

10. Verwendung eines Abdeckbandes nach einem der Ansprüche 1 - 9 zum Abdecken nicht zu lackierender Teile, insbesondere beim Autolackieren.

## Claims

1. Masking tape comprising
a) a temperature-resistant adhesive tape (1) having a flexible film backing (2) in a self-adhesive composition (3),
b) a masking paper (5) which is laminated on in the edge region (4) of the self-adhesive composition (3) and has good paint adhesion and absorbency, and also
c) a masking film (6) laminated on in the very same edge region (4) of the self-adhesive composition (3),
d) the masking film (6) fully masking the masking paper (5) on the side at which the self-adhesive composition (3) of the adhesive tape (1) is located and so depositing the masking paper (5) in the bonded state.

2. Masking tape according to Claim 1, **characterized in that** the adhesive tape (1) is a temperature-resistant adhesive tape for the car painter, a so-called fine line tape having in particular a temperature stability of 130°C (1 hour) maximum, especially one having a polypropylene or plasticized-PVC film backing.

3. Masking tape according to Claim 1, **characterized in that** the adhesive tape (1) is 15 - 75 mm wide, in particular 19 - 30 mm wide.

4. Masking tape according to Claim 1, **characterized in that** the masking material (5) consists of paper, woven or nonwoven.

5. Masking tape according to Claim 1, **characterized in that** the masking material (5) is an unbleached kraft paper of 30 - 40 g/m² with a width of 15 - 50 cm, in particular 20 - 40 cm.

6. Masking tape according to Claim 1, **characterized in that** the masking film (6) is a film 7 - 40, especially 8 - 20 µm thick, made of polyolefin, especially polyethylene, and in particular corona-pretreated, whose width is 0.5 - 2 m.

7. Masking tape according to Claim 1, **characterized in that** the masking film (6) is in extractably folded form, in particular modelled on the dimensions of the masking material (5) and being folded against the said material (5) in a concertina-like fashion.

8. Masking tape according to Claim 1, **characterized in that** the edge region (4) of the self-adhesive composition (3), on which the masking material (5) bonds adhesively is 1-5, especially 2-4 mm wide and the adjacent edge region (4) of the self-adhesive composition (3), on which the masking film (6) bonds adhesively, is 1-5, especially 2-4 mm wide.

9. Masking tape according to Claim 1, **characterized in that** it is wound in the form of a roll, the masking film (6) being folded and the height of the roll corresponding approximately to the width of the masking material (5) plus the width of the adhesive tape (1).

10. Use of a masking tape according to one of Claims 1 - 9 for masking parts which are not to be painted, especially when painting cars.

## Revendications

1. Ruban de masquage constitué de
a) un ruban adhésif (1) résistant à la température, comportant un support pelliculaire souple (2) et une matière autoadhésive (3),
b) un matériau de masquage (5) à bonne adhérence à la peinture et bon pouvoir absorbant, contrecollé dans la zone de bord (4) de la matière autoadhésive (3), ainsi que
c) une pellicule de masquage (6) contrecollée dans la même zone de bord (4) de la matière autoadhésive (3),
d) la pellicule de masquage (6) recouvrant totalement le papier de masquage (5) du côté sur lequel se trouve la matière autoadhésive (3) du ruban adhésif (1) et déposant ainsi à l'état collé le papier de masquage (5).

2. Ruban de masquage selon la revendication 1, **caractérisé en ce que** le ruban adhésif (1) est un ruban adhésif résistant à la température pour le peintre d'automobiles, un dénommé *fine line tape*, en particulier ayant une résistance à la température de 130°C au maximum (1 heure), notamment un tel ruban adhésif comportant un support pelliculaire en polypropylène ou PVC souple.

3. Ruban de masquage selon la revendication 1, **caractérisé en ce que** le ruban adhésif (1) a une largeur de 15-75 mm, en particulier de 19-30 mm.

4. Ruban de masquage selon la revendication 1, **caractérisé en ce que** le matériau de masquage (5) consiste en papier, tissu, non-tissé.

5. Ruban de masquage selon la revendication 1, **caractérisé en ce que** le matériau de masquage (5) est un papier kraft non blanchi de 30-40 g/m² et a une largeur de 15-50 cm, en particulier de 20-40 cm.

6. Ruban de masquage selon la revendication 1, **caractérisé en ce que** la pellicule de masquage (6) est une pellicule de 7-40, en particulier de 8-20 µm d'épaisseur, à base de polyoléfine, en particulier de polyéthylène, et en particulier prétraitée par effet couronne, dont la largeur est de 0,5-2 m.

7. Ruban de masquage selon la revendication 1, **caractérisé en ce que** la pellicule de masquage (6) est présente sous forme repliée de façon télescopique, en particulier adaptée aux dimensions du matériau de masquage (5) et se trouve repliée en accordéon sur celui-ci.

8. Ruban de masquage selon la revendication 1, **caractérisé en ce que** la zone de bord (4) de la matière autoadhésive (3) sur laquelle est collé le matériau de masquage (5) a une largeur de 1-5, en particulier de 2-4 mm, et la zone de bord (4) de la matière autoadhésive (3) y faisant suite, sur laquelle est collée la pellicule de masquage (6), a une largeur de 1-5, en particulier de 2-4 mm.

9. Ruban de masquage selon la revendication 1, **caractérisé en ce qu'**il se trouve enroulé en un rouleau, la pellicule de masquage (6) étant repliée et la hauteur du rouleau correspondant approximativement à la largeur du matériau de masquage (5) plus la largeur du ruban adhésif (1).

10. Utilisation d'un ruban de masquage selon l'une quelconque des revendications 1 à 9, pour le masquage de parties ne devant pas être peintes, en particulier dans la mise en peinture d'automobiles.
